# EUROPÄISCHE PATENTSCHRIFT

(11) **EP 0 427 102 B1**
(45) Veröffentlichungstag und Bekanntmachung des Hinweises auf die Patenterteilung: **27.07.1994**
(21) Anmeldenummer: 90120879.3
(22) Anmeldetag: 31.10.1990
(51) Int. Cl.: G01F 1/26, G01F 1/24, G01F 1/22

(54) **Strömungsmesser zur Messung der Durchflussmenge in einer Leitung**
Flow meter for measuring the flow rate in a conduit
Débitmètre pour mesurer le débit dans un conduit

(30) Priorität: 06.11.1989 DE 3936844
(43) Veröffentlichungstag der Anmeldung: 15.05.1991
(73) Patentinhaber: Beringer-Hydraulik AG, CH-6345 Neuheim/Zug (CH)
(72) Erfinder: Häusler, Hubert, CH-6345 Neuheim/Zug (CH)
(74) Vertreter: Pfingsten, Dieter, Dipl.-Ing.

(56) Entgegenhaltungen:
- EP-A- 0 099 712
- DE-C- 2 658 928
- FR-A- 99 712
- GB-A- 2 068 560

## Beschreibung

Die Erfindung betrifft Strömungsmesser nach dem Oberbegriff des Anspruchs 1 bekannt aus der EP 99712 oder Anspruchs 2, bekannt aus GB 2068560. Weitere Strömungsmesser sind bekannt durch das deutsche Patent 26 58 928.

Die Kolben diesen Strömungsmesser sind gegen die Kraft einer Feder beweglich Dabei wird der Weg des Kolbens des Strömungsmessers durch einen Wegmesser mit elektrischen Signalgeber in ein elektrisches Ausgangssignal umgewandelt. Der Zusammenhang zwischen diesem Ausgangssignal und dem Weg des Kolbens ist bekanntlich linear. Der Kolben des Strömungsmessers nach der DE PS 2658928 überstreicht bei seinem Weg einen wegabhängig variablen Auslaßquerschnitt, der so ausgelegt sein muß, daß zwischen dem Weg des Kolbens und der Durchflußmenge ebenfalls ein linearer Zusammenhang besteht. Dadurch wird der Einfluß der Federkennlinie auf die Durchflußmenge ausgeglichen. Aus diesem Grunde besteht ein linearer Zusammenhang auch zwischen der Durchflußmenge und dem Ausgangssignal des Potentiometers. Anderenfalls ist der Strömungsmesser zum Einsatz in einem hydraulischen Regelkreis untauglich.

Bei der Verwendung eines solchen Strömungsmessers treten Nachteile auf: Dabei ist zu berücksichtigen, daß bei laminarer Strömung, also geringen Durchflußmengen der Bereich der Grenzflächenreibung größer ist als bei turbulenter Strömung. Das führt dazu, daß der Zusammenhang zwischen dem Mengendurchsatz und dem Ausgangssignal zwischen dem Bereich geringer Durchsatzmengen und dem Bereich höherer Durchsatzmengen nicht linear ist infolge der Unstetigkeit beim Übergang von laminarer zu turbulenter Strömung und umgekehrt. Schließlich ergibt sich auch eine sehr starke Viskositätsabhängigkeit infolge der betriebsmäßig auftretenden Temperaturschwankungen und der dadurch bedingten Viskositätsschwankungen.

Ähnlich ist die Lösung nach der bereits genannten EP 99712, wo ein magnetischer Detektor und zusätzlich ein ROM verwendet wird, in welchem nicht-lineare digitale Informationen abgelegt sind. Damit läßt sich zwar prinzipiell eine Linearisierung erreichen, es sind jedoch für jeden Betriebspunkt zunächst einmal Umrechnungen und Interpolationen zwischen den im ROM abgelegten Informationen erforderlich, bevor endlich das linearisierte Ausgangssignal zur Verfügung steht.

Darüberhinaus ist aus der GB 2 068 560 ein Strömungsmesser bekannt, bei welchem grundsätzlich von einem linearen Zusammenhang zwischen der Durchflußmenge und dem Weg des Kolbens ausgegangen wird. Dieser Strömungsmesser kann allerdings nur dann genau arbeiten, wenn der Einfluß der Federkennlinie, welche den Zusammenhang zwischen Kolbenweg und Durchflußmenge entlinearisiert, in einer nachgeordneten Auswerteschaltung, z.B. gemäß der EP 99 712, kompensiert wird. Damit würden aber auch bei diesem Strömungsmesser die oben genannten Nachteile auftreten.

Allerdings bietet diese Bauform den Vorteil, daß sich das Verhältnis des benetzten Umfangs zum Strömungsquerschnitt im Meßbereich möglichst wenig ändert.

Als benetzter Umfang wird dabei der Linienzug bezeichnet, der den Strömungsquerschnitt begrenzt, also z.B. der Umfang des Meßkolbens und der Umfang der Leitung im durch den Meßkolben aufgesteuerten Querschnitt.

Aufgabe der Erfindung ist es daher, einen Strömungsmesser mit linearisiertem Zusammenhang zwischen der Durchflußmenge und dem Ausgangssignal im Meßbereich zu schaffen, bei dem das linearisierte Ausgangssignal im gesamten Meßbereich stetig und ohne Zeitverzug erzeugt wird.

Die Lösung dieser Aufgabe ergibt sich aus dem Kennzeichen des Anspruchs 1 oder des Anspruchs 2.

Bei dem durch das deutsche Patent 26 58 928 (Beb 76/1) bekannten Strömungsmesser wird - wie gesagt - als Signalgeber ein Potentiometer benutzt. Bei Benutzung eines solchen Potentiometers müßte das Potentiometer selbst aus einem Leiter hergestellt sein, bei dem sich der Leitwert über die Länge ändert. Ebenso wäre denkbar, daß das Ausgangssignal des Potentiometers über einen Zwischenstromkreis mit elektronischen Bauelementen geleitet wird, welche die Ausgangsspannung des Potentiometers noch einmal derart umformen, daß zwischen dem Ausgangssignal dieses Zwischenstromkreises und dem Weg des Kolbens des Strömungsmessers ein nicht-linearer Zusammenhang derart hergestellt wird, daß der nicht-lineare Zusammenhang zwischen dem Weg des Kolbens und der Durchflußmenge kompensiert wird.

In dieser Erfindung wird als Signalgeber ein sog. Hallgenerator bevorzugt. Dabei ist mit dem Kolben des Strömungsmessers ein Magnet mechanisch, insbesondere über die Kolbenstange verbunden. Das Magnetfeld dieses Permanentmagneten kreuzt senkrecht einen flachen, stromdurchflossenen Leiter. Dadurch entsteht senkrecht zur Richtung des Stromes und zum Magnetfeld eine Hallspannung, die der Stärke des Magnetfeldes proportional ist und als Ausgangssignal dient. Dieses Ausgangssignal ist veränderlich mit der Bewegung des Kolbens und des damit verbundenen Magneten. Mit einer derartigen Hallsonde läßt sich ohne zusätzlichen elektrischen bzw. elektronischen Aufwand eine Linearität zwischen der Durchflußmenge und dem Ausgangssignal herstellen durch die in Anspruch 3 angegebenen Maßnahmen, durch die der Einfluß der Federkennlinie auf den Zusammenhang zwischen der zu messenden Durchflußmenge und dem Ausgangssignal derart kompensiert wird, daß ein linearer Zusammenhang entsteht. Dabei hat sich herausgestellt, daß sich durch eine vorgewählte Teilmagnetisierung des Magneten der Hallsonde ein derart nichtlinearer Zusammenhang zwischen dem Kolbenweg des Strömungsmessers und dem Ausgangssignal der Hallsonde herstellen läßt, daß der Einfluß der Federkraft kompensiert wird. Die Teilmagnetisierung ist eine sehr einfache, mit großer Genauigkeit reproduzierbare Maßnahme.

Im folgenden werden Ausführungsbeispiele der Erfindung anhand der Zeichnung beschrieben.

Es zeigen:
- Fig. 1: Längsschnitt durch das Gehäuse eines Strömungsmessers;
- Fig. 2: Längsschnitt durch das Gehäuse eines weiteren Ausführungsbeispiels;
- Fig. 3: Meßkolben für den Strömungsmesser nach Fig. 1;
- Fig. 4: Ausführungsbeispiel der Magnetsonde;
- Fig. 5: Diagramm der Ausgangsspannung der Hallsonde über den Kolbenweg bei Teilentmagnetisierung;
- Fig. 6: Diagramm der Ausgangsspannung der Hallsonde über der Durchflußmenge.

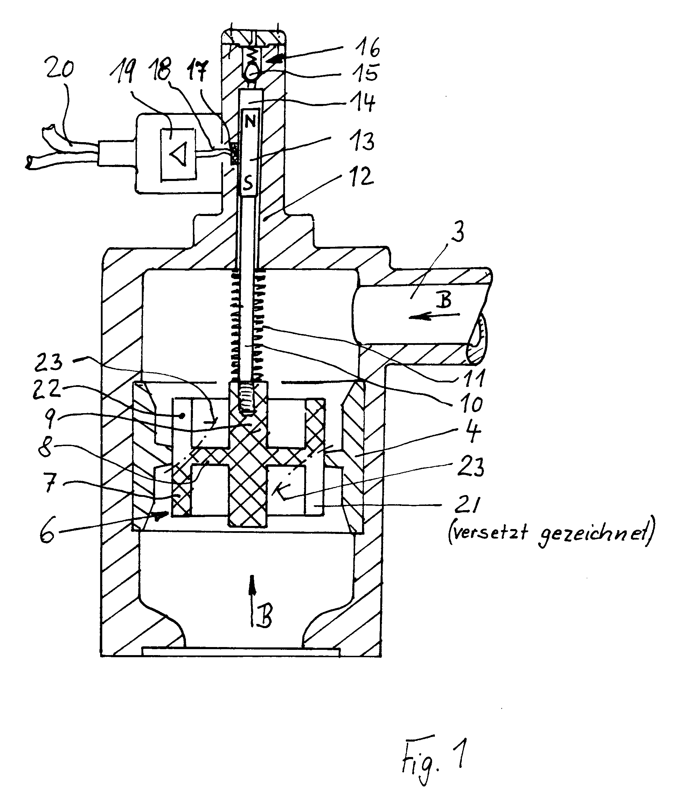

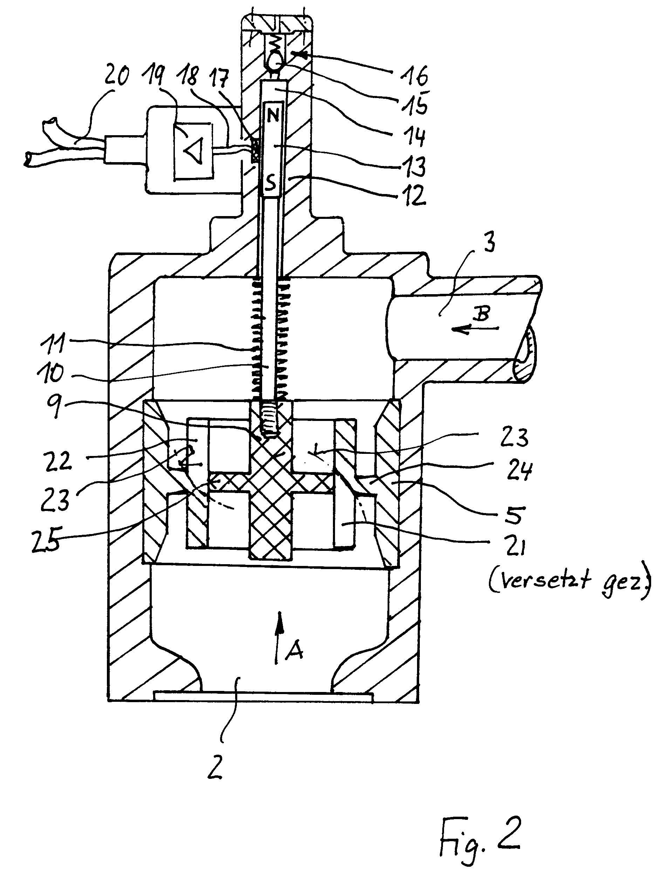

Die Ausführungsbeispiele 1 und 2 sind in weiten Teilen identisch. Daher bezieht sich die folgende Beschreibung auf die Figuren 1 und 2. Abweichungen sind besonders kenntlich gemacht.

Das Gehäuse 1 des Strömungsmessers besitzt die Leitungsanschlüsse 2 und 3. Es sind die Strömungsrichtungen A oder B möglich. In dem Gehäuse 1 ist der Meßkolben 6 gleitend geführt. Dabei bildet der Meßkolben mit dem Gehäuse 1 einen engsten Spalt. Der engste Spalt ändert sich in der jeweiligen Bewegungsrichtung, und zwar wird der Durchflußquerschnitt größer, wenn sich der Kolben in der jeweiligen Bewegungsrichtung A bzw. B bewegt. Auf die Einzelheiten bezüglich Ausbildung des Kolbens und des Leitungsquerschnittes wird weiter unten mit Bezug auf Fig. 1 und Fig. 2 eingegangen. An dem Kolben ist eine Betätigungsstange 11 befestigt. Der Kolben wird durch eine Feder 11 gehalten. Die Feder 11 ist so vorgespannt, daß der Kolben den engsten Querschnitt der Leitung vollständig oder fast vollständig sperrt, wenn keine äußeren Kräfte auf den Kolben einwirken, d.h. wenn auf den beiden Seiten des Kolbens kein Druckunterschied besteht und keine Strömung fließt. Wenn der Kolben mit Strömungsrichtung A oder mit Strömungsrichtung B beaufschlagt wird, so bewegt er sich jeweils gegen die Federkraft.

Die Betätigungsstange ist in dem Meßansatz 12 des Gehäuses geradgeführt. An ihrem Ende sitzt ein Magnetstab 13. Der Endraum 14 des Meßansatzes wird durch ein Entlüftungsventil 16, das als federbelastetes Rückschlagventil mit Kugel 15 ausgebildet ist, entlüftet. In dem Meßansatz und an dem Meßansatz ist ein Wegmesser mit einem elektrischen Signalgeber befestigt. Der Wegmesser weist die Leiterplatte 17 eines Hallsensors bzw. einer Hallsonde auf. Die Hallsonde ist eine Platte, die in einer Richtung (längs) von einem elektrischen Strom durchflossen ist und in der in der anderen Richtung (quer) eine von dem Magnetfeld des Magnetstabes 13 abhängige elektrische Spannung erzeugt wird. Diese Meßspannung wird über Leitungen 18 zum Verstärker 19 übertragen, so daß am Ausgang des Signalgebers ein Ausgangssignal in Ausgangsleitungen 20 ansteht, welches die Position des Magnetstabes 13 und damit die Position des Kolbens 6 repräsentiert und damit ein Maß für die Durchflußmenge in Strömungsrichtung A bzw. Strömungsrichtung B ist.

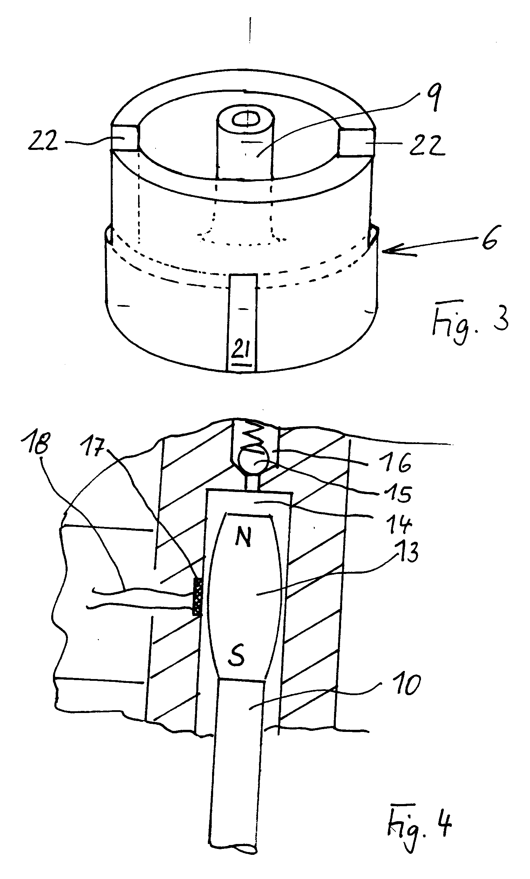

In dem Gehäuse 1 des Ausführungsbeispiels nach Fig. 1 ist ein Bund 4 mit einem Wulst auf dem Umfang angebracht. Der Kolben 6 des Strömungsmessers besteht aus einem Rohr 7, das durch einen Deckel 8 axial verschlossen ist. Der Deckel 8 liegt etwa auf der axialen Mitte des Rohres 7. Der Deckel ist zentrisch durch Kolbenstange 9 mit der Betätigungsstange 10 fest verbunden. Das Rohr 7 bildet mit dem Wulst des Einsatzes 4 den engsten Spalt, in dem das Rohr 7 gleitend in axialer Richtung der Betätigungsstange und des Rohrs geführt ist. Das Rohr besitzt auf seinem Umfang einen oder mehrere Schlitze, die von der jeweils freien Stirnseite sich bis zu der Ebene erstrecken, in welcher das Rohr durch den Deckel 8 verschlossen ist. Diese Schlitze 21 bzw. 22 werden durch einen Fräser in die Rohrwand geschnitten. Die jeweiligen Fräserkreise 23 sind angedeutet. Aus der Benutzung eines Scheibenfräsers ergibt sich, daß die Schlitzwandungen jeweils durch Mantellinien gebildet werden. Daher hat jeder Schlitz eine rechteckige Form. Die Schlitze an der einen Stirnseite sind gegenüber den Schlitzen der anderen Stirnseite winkelversetzt. Eine Ansicht eines derartigen Kolbens ist in Fig. 3 dargestellt.

In dem Ausführungsbeispiel nach Fig. 2 sitzt an dem Einsatz 5 ein Rohr 23, das auf der Zulaufseite A bzw. B jeweils von einem Ringraum umgeben ist. Das Rohr ist axial in Durchflußrichtung A bzw. B ausgerichtet. Das Rohr besitzt auf seinem Umfang einen oder mehrere Schlitze, die von der jeweils freien Stirnfläche sich bis zu der Ebene erstrecken, in welcher das Rohr durch den Verbindungsflansch 24, der etwa in der axialen Mitte des Rohres angebracht ist, mit dem Gehäuse bzw. Einsatz 5 dicht verbunden ist. Die Schlitze an der einen Stirnseite sind gegenüber den Schlitzen der anderen Stirnseite winkelversetzt. Diese Schlitze 21 bzw. 22 werden durch einen Scheibenfräser in die Rohrwand geschnitten. Die Fräserkreise 23 sind angedeutet. Aus der Benutzung des Fräsers ergibt sich, daß die Schlitzwandungen jeweils durch Mantellinien gebildet werden und daher eine rechtekkige Form des Schlitzes zur Folge haben.

Aus der rechteckigen Form des Schlitzes ergibt sich, daß der Weg des Kolbens und die Durchflußmenge in einem nichtlinearen Zusammenhang stehen. Der Kolbenweg und die Durchflußmenge sind also nicht proportional zueinander, da die Federkennlinie, also der Zusammenhang zwischen dem Kolbenweg und der Federkraft, sich störend bemerkbar macht.

Um nun die Proportionalität zwischen der Durchflußmenge und dem Ausgangssignal 20 herzustellen, sind erfindungsgemäß verschiedene Maßnahmen möglich. In Betracht kommt die Auslegung des elektronischen Verstärkers in der Weise, daß zwischen dem Meßsignal 18 und daß Ausgangssignal 20 ein nicht-linearer Zusammenhang besteht, so daß der nichtlineare Zusammenhang zwischen der Durchflußmenge und dem Weg des Kolbens 6 durch den nicht-linearen Zusammenhang zwischen dem Meßsignal 18 und dem Ausgangssignal 20 kompensiert wird.

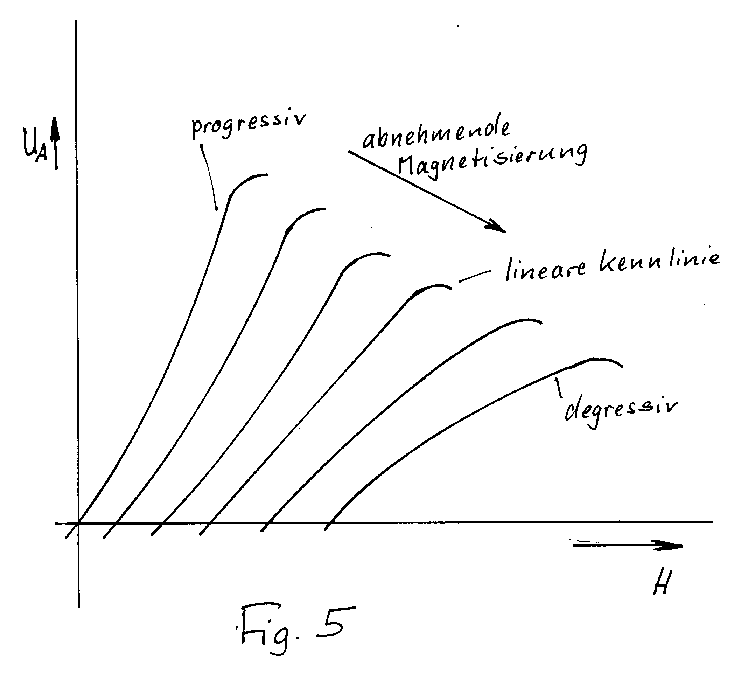

Eine andere Möglichkeit, die bei der heutigen Technik der Magnetherstellung sich anbietet und die sich durch gute Wiederholbarkeit bei der Herstellung und gute Konstanz im Langzeitverhalten auszeichnet, ist erfindungsgemäß die Variation der Magnetisierung des Magnetstabes über seine Länge. Hierzu kann man eine über die Länge unterschiedliche Magnetisierung des zylindrischen des Magnetstabes durchführen, wozu sich die Herstellung des magnetstabes in einem Sinterverfahren anbietet. Es ist aber auch möglich, den Magnetstab mit über die Länge variablem Querschnitt herzustellen, wie dies in dem Ausführungsbeispiel nach Fig. 4 gezeigt ist. Dabei hängt es von der Einbausituation ab, welche Kurve dem Querschnittsverlauf zu geben ist. Das Ausführungsbeispiel in Fig. 4 deutet lediglich das Prinzip an. Es kann ebenso sein, daß der Magnetstab sich in seinem mittleren Bereich zwischen Nordpol und Südpol einschnüren muß.

Eine weitere Möglichkeit besteht darin, den Magnetstab oder die der Hallsonde zugewandte Flanke über die Länge des Magnetstabes zu krümmen. Hierdurch ändert sich bei Bewegung des Kolbens und des Magnetstabes sein Abstand von der Hallsonde 17 und damit der Einfluß des Magnetfeldes auf die Hallsonde und damit die Abhängigkeit zwischen dem Kolbenweg und dem Ausgangssignal.

Eine weitere Möglichkeit besteht darin, die Kennlinie zwischen dem Weg des Permanentmagneten und der Hallsonde dadurch zu beeinflussen, daß der Magnet nur teilmagnetisiert wird, z.B. indem er zunächst bis zur Sättigung magnetisiert und dann - z.B. durch Anlegen eines Wechselstroms - teilweise entmagnetisiert wird. Es ergibt sich aus Fig. 4, daß in Abhängigkeit von der teilweisen Entmagnetisierung Kennlinien zwischen dem Ausgangssignal der Hallsonde und dem Kolbenweg entstehen, die unterschiedliche Steilheit und Steigung haben. Es ergibt sich aus dem Kennlinienfeld, daß bei voller Magnetisierung das Ausgangssignal 20 mit dem Kolbenweg bzw. Weg des Magneten progressiv zunimmt, während bei starker Teilentmagnetisierung ein degressiver Zusammenhang besteht. Die Teilentmagnetisierung wird nun derart ausgewählt und durchgeführt, daß die entstehende Kennlinie der Federkennlinie im wesentlichen im umgekehrten Verhältnis entspricht. Durch diese Maßnahme wird der Einfluß der Federkennlinie auf das Ausgangssignal kompensiert und es entsteht ein linearer Zusammenhang zwischen der Durchfluß-menge und dem Ausgangssignal 20 der Hallsonde. Diese Möglichkeit gestattet die Verwendung eines zylindrischen Magneten, der über den Weg des Magneten mit gleichem Abstand zu der Hallsonde geführt ist. Ferner kann auf einen zusätzlichen elektrischen/elektronischen Aufwand verzichtet werden.

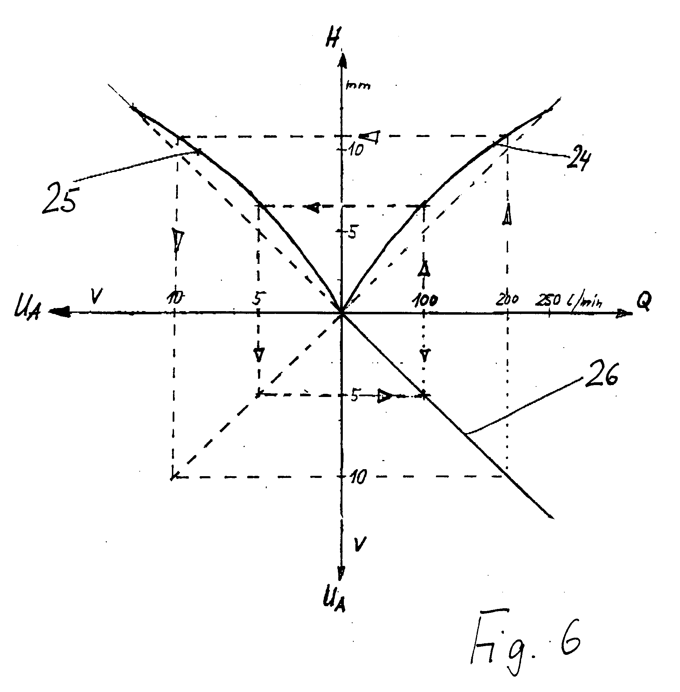

Es ergibt sich weiter aus Fig. 6, daß die Kennlinie bewußt so ausgewählt wird, daß der unlineare Zusammenhang zwischen dem Kolbenweg und der Durchflußmenge Q kompensiert wird. Es ist hier als Beispiel ein Betriebspunkt mit einer Durchflußmenge von 100 l/min eingezeichnet. Infolge des Anstiegs der Federkraft mit dem Kolbenhub entsteht ein nicht-linearer Zusammenhang zwischen dem Hub und der Durchflußmenge entsprechend der eingezeichneten Kennlinie 24. Der Hub beträgt daher für das Beispiel 7 mm. Die Teilentmagnetisierung ist nun so durchgeführt, daß zwischen dem Hub und dem Ausgangssignal ein progressiver Zusammenhang besteht, der den Einfluß der Federkennlinie entsprechend Kennlinie 25 kompensiert. Es ergibt sich hierdurch bei einem Hub von 7 mm ein Ausgangssignal von 5 V. Einer Durchflußmenge von 100 l/min entspricht daher dieses Ausgangssignal von 5 V. Es ist ersichtlich, daß in einem anderen Betriebspunkt, z.B. bei einer Durchflußmenge von 200 l, ein Hub von 11 mm entsteht, daß dieser Hub aber eine Ausgangsspannung von lediglich 10 V zur Folge hat. Dadurch ist die Linearisierung hergestellt, d.h. die Kennlinie 26, die den Zusammenhang zwischen dem Ausgangssignal UA und der Durchflußmenge Wiedergibt, ist eine mit der Durchflußmenge ansteigende Gerade.

Durch die Erfindung entsteht ein berührungsloser Durchfluß- oder Strömungsmesser, der eine einfache Form hat, der aber andererseits über seinen gesamten Meßbereich ein stetiges Meßverhalten hat, wobei das Ausgangssignal der Durchflußmenge stets proportional ist.

### BEZUGSZEICHENAUFSTELLUNG

- 1: Gehäuse
- 2: Leitungsanschluß
- 3: Leitungsanschluß
- 4: Bund
- 5: Zylinder
- 6: Kolben
- 7: Rohr
- 8: Deckel, Boden
- 9: Kolbenstange
- 10: Betätigungsstange
- 11: Feder
- 12: Meßansatz
- 13: Magnet
- 14: Endraum
- 15: Kugel
- 16: Entlüftungsventil
- 17: Hallsonde
- 18: Leitung
- 19: Verstärker
- 20: Ausgangssignal, Ausgangsleitung
- 21: Schlitz, Strömungsrichtung a
- 22: Schlitz, Strömungsrichtung b
- 23: Fräserkreis
- 24: Kennlinie Hub/Durchflußmenge
- 25: Kennlinie Hub/Ausgangssignal UA
- 26: Kennlinie Ausgangssignal UA/Durchflußmenge Q

## Patentansprüche

1. Strömungsmesser
zur Messung der Durchflußmenge in einer Leitung mit
1.1 einem Kolben, der in einem engsten Querschnitt der Leitung seine Neutrallage hat,
der gegen einen Kraftgeber beweglich ist
und der bei Bewegung in Stromrichtung einen zunehmend größer werdenden Leitungsquerschnitt freigibt
und mit
1.2 einem Wegmesser zur Messung der Position des Kolbens und mit einem elektrischen Signalgeber zur Erzeugung eines Ausgangssignals, welches in linearem Zusammenhang mit der Durchflußmenge pro Zeiteinheit steht,
dadurch gekennzeichnet, daß
1.3 der Kolben ein zylindrisches Rohr ist, welches an seiner von der Strömung abgewandten Seite verschlossen und auf seiner der Strömung zugewandten Stirnseite offen ist
und dessen Mantel von zumindest einem Schlitz aufgeschnitten ist, der durch zwei Schlitzwandungen längs jeweils einer Mantellinie gebildet wird,
1.4 daß der Kolben bei seiner Bewegung in Stromrichtung mit einem ringförmigen Steuerbund der Leitung den engsten Querschnitt bildet,
1.5 und daß der Wegmesser mit dem elektrischen Signalgeber derart ausgelegt ist, daß zwischen dem vom Wegmesser erfaßten Weg des Kolbens und dem Ausgangssignal des Signalgebers ein nicht-linearer Zusammenhang besteht, der dem Zusammenhang zwischen der Durchflußmenge und dem Weg des Kolbens derart angepaßt ist,
daß die Linearisierung des Zusammenhangs zwischen dem AusgangsSignal und der Durchflußmenge erzielt wird.

2. Strömungsmesser
zur Messung der Durchflußmenge in einer Leitung mit
2.1 einem Kolben, der in einem engsten Querschnitt der Leitung seine Neutrallage hat,
der gegen einen Kraftgeber beweglich ist
und der bei Bewegung in Stromrichtung einen zunehmend größer werdenden Leitungsquerschnitt freigibt
und mit
2.2 einem Wegmesser zur Messung der Position des Kolbens und mit einem elektrischen Signalgeber zur Erzeugung eines Ausgangssignals, welches in linearem Zusammenhang mit der Durchflußmenge pro Zeiteinheit steht,
2.3 der Kolben in einem Zylinder beweglich ist und mit dem Zylinder den engsten Querschnitt bildet,
2.4 der Zylinder an seinem von der Strömung abgewandten Ende in die Leitung dicht eingepaßt und auf seinem der Strömung zugewandten Ende von einem offenen Ringraum umgeben ist,
wobei
der Zylinder zumindest einen durch zwei Mantellinien gebildeten Schlitz besitzt, welcher von dem der Strömung zugewandten Ende des Zylinders ausgeht und sich im wesentlichen über den Weg des Kolbens erstreckt,
dadurch gekennzeichnet, daß
2.5 der Wegmesser mit dem elektrischen Signalgeber derart ausgelegt ist, daß zwischen dem vom Wegmesser erfaßten Weg des Kolbens und dem Ausgangssignal des Signalgebers ein nicht-linearer Zusammenhang besteht, der dem Zusammenhang zwischen der Durchflußmenge und dem Weg des Kolbens derart angepaßt ist,
daß die Linearisierung des Zusammenhangs zwischen dem Ausgangssignal und der Durchflußmenge erzielt wird.

3. Strömungsmesser nach Anspruch 1 oder 2,
dadurch gekennzeichnet, daß
der Wegmesser ein Hallsensor ist,
dessen die Hallsonde überstreichender Magnetstab
3.1 einen über seine Länge derart variierenden Querschnitt besitzt oder
3.2 über seine Länge derart variierend magnetisiert ist oder
3.3 über seine Länge relativ zur Hallsonde mit derart variierendem Abstand geführt ist,
oder
3.4 bei über seine Länge homogener Magnetisierung und zylindrischer Gestalt derart teilmagnetisiert ist, daß der Quotient zwischen dem Weg des Kolbens und dem Ausgangssignal der Hallsonde über den Weg des Kolbens dem Quotienten zwischen dem Weg des Kolbens und der Durchflußmenge an allen Stellen des Weges des Kolbens derart entspricht, daß der Einfluß der Federkennlinie auf das Ausgangssignal der Hallsonde kompensiert wird und ein linearer Zusammenhang zwischen dem Ausgangssignal der Hallsonde und der Durchflußmenge entsteht.

## Claims

1. A flow meter
for measuring the flow rate in a conduit with
1.1 a piston which has its neutral position in a minimum cross-section of the conduit,
is movable against a source of force
and which, in the event of movement in the flow direction, releases a conduit cross-section which becomes increasingly larger
and with
1.2 a position sensor for measuring the position of the piston and with an electrical signal encoder for generating an output signal which has a linear relationship with the flow rate per unit of time,
characterised in that
1.3 the piston is a cylindrical pipe which is closed at its side facing away from the flow and is open at its end face facing the flow
and the jacket of which is cut by at least one slot which is formed by two slot walls, each along a surface line,
1.4 that, during its movement in the flow direction, the piston forms the minimum cross-section with an annular control collar of the conduit,
1.5 and that the position sensor with the electrical signal encoder is designed such that there is a non-linear relationship between the travel of the piston recorded by the position sensor and the output signal of the signal encoder, which is matched to the relationship between the flow rate and the travel of the piston such that linearisation of the relationship between the output signal and the flow rate is obtained.

2. A flow meter
for measuring the flow rate in a conduit with
2.1 a piston which has its neutral position in a minimum cross-section of the conduit,
is movable against a source of force
and which, in the event of movement in the flow direction, releases a conduit cross-section which becomes increasingly larger
and with
2.2 a position sensor for measuring the position of the piston and with an electrical signal encoder for generating an output signal which has a linear relationship with the flow rate per unit of time,
2.3 the piston being movable in a cylinder and, together with the cylinder, forming the minimum cross-section,
2.4 at its end facing away from the flow, the cylinder fitting tightly into the conduit and, at its end facing the flow, being surrounded by an open annular space,
wherein
the cylinder has at least one slot formed by two surface lines, which starts from the end of the cylinder facing the flow and extends substantially over the travel of the piston,
characterised in that
2.5 the position sensor, with the electrical signal encoder, is designed such that there is a non-linear relationship between the travel of the piston recorded by the position sensor and the output signal of the signal encoder, which is adapted to the relationship between the flow rate and the travel of the piston such that
linearisation of the relationship between the output signal and the flow rate is obtained.

3. A flow meter according to claim 1 or 2,
characterised in that
the position sensor is a Hall sensor,
the magnetic bar of which, passing over the Hall probe,
3.1 has a cross-section varying over its length or
3.2 is variably magnetised over its length or
3.3 is guided at a variable distance with respect to the Hall probe over its length
or
3.4 with homogenous magnetisation over its length and cylindrical design, is partially magnetised such that the quotient between the travel of the piston and the output signal of the Hall probe over the travel of the piston corresponds to the quotient between the travel of the piston and the flow rate at all points of the travel of the piston, such that the influence of the spring characteristic on the output signal of the Hall probe is compensated and a linear relationship between the output signal of the Hall probe and the flow rate is obtained.

## Revendications

1. Débitmètre pour mesurer le débit dans un conduit, comportant
1.1 un piston dont la position neutre est située dans une section très réduite du conduit, qui se déplace à l'encontre d'un dispositif d'application de force et qui, lors de son déplacement dans la direction d'écoulement, libère une section de conduit de plus en plus grande,
1.2 un système de mesure de déplacement pour mesurer la position du piston et un transmetteur de signal électrique destiné à produire un signal de sortie qui est lié par une relation linéaire au débit par unité de temps,
caractérisé par le fait que
1.3 le piston est formé par un tube cylindrique dont le côté éloigné de l'écoulement est fermé tandis que son côté frontal tourné vers l'écoulement est ouvert et dont la paroi extérieure est pourvue d'au moins une fente délimitée par deux parois de fente situées chacune sur une génératrice,
1.4 par le fait que, lors de son déplacement dans la direction d'écoulement, le piston forme la section très réduite avec un bord de contrôle annulaire du conduit,
1.5 et par le fait que le système de mesure de déplacement et le transmetteur de signal électrique sont conçus de manière telle qu'il existe une relation non-linéaire entre la course du piston mesurée par le système de mesure de déplacement et le signal de sortie du transmetteur de signal, laquelle relation est adaptée à la relation entre le débit et la course du piston de manière à obtenir une relation linéaire entre le signal de sortie et le débit.

2. Débitmètre pour mesurer le débit dans un conduit, comportant
2.1 un piston dont la position neutre est située dans une section très réduite du conduit, qui se déplace à l'encontre d'un dispositif d'application de force et qui, lors de son déplacement dans la direction d'écoulement, libère une section de conduit de plus en plus grande,
2.2 un système de mesure de déplacement pour mesurer la position du piston et un transmetteur de signal électrique destiné à produire un signal de sortie qui est lié par une relation linéaire au débit par unité de temps,
2.3 le piston étant mobile dans un cylindre et formant avec celui-ci la section très réduite
2.4 le cylindre, à son extrémité éloignée de l'écoulement, étant monté avec étanchéité dans le conduit et, à son extrémité tournée vers l'écoulement, étant entouré par un espace annulaire ouvert,
le cylindre comportant au moins une fente qui est délimitée par deux génératrices et s'étend à partir de l'extrémité du cylindre tournée vers l'écoulement sensiblement sur l'ensemble de la course du piston,
caractérisé par le fait que
2.5 le système de mesure de déplacement et le transmetteur de signal électrique sont conçus de telle sorte qu'il existe une relation non-linéaire entre la course du piston mesurée par le système de mesure de déplacement et le signal de sortie du transmetteur de signal, laquelle relation est adaptée à la relation entre le débit et la course du piston de manière à obtenir une relation linéaire entre le signal de sortie et le débit.

3. Débitmètre selon la revendication 1 ou 2, caractérisé par le fait que le système de mesure de déplacement est un capteur de Hall dans lequel le barreau magnétique qui se déplace devant le capteur
3.1 a une section qui varie sur sa longueur ou
3.2 présente une magnétisation qui varie sur sa longueur ou
3.3 se déplace par rapport à la sonde avec une distance qui varie sur sa longueur ou,
3.4 pour une magnétisation homogène et une forme cylindrique, est partiellement magnétisé de manière telle que le quotient entre la course du piston et le signal de sortie de la sonde de Hall sur la course du piston corresponde au quotient entre la course du piston et le débit en tout point de la course du piston de telle sorte que l'influence de la caractéristique du ressort sur le signal de sortie de la sonde de Hall soit compensée et que l'on obtienne une relation linéaire entre le signal de sortie de la sonde de Hall et le débit.
